# EUROPÄISCHE PATENTANMELDUNG

(11) **EP 4 471 370 A1**
(43) Veröffentlichungstag der Anmeldung: **04.12.2024**
(21) Anmeldenummer: 24174386.3
(22) Anmeldetag: 06.05.2024
(51) Int. Cl.: G01B 11/25

(54) **VERFAHREN ZUR MESSUNG VON EIGENSCHAFTEN EINER WEICHENANLAGE**

(30) Priorität: 31.05.2023 DE 102023114291
(71) Anmelder: Deutzer Technische Kohle GmbH, 15738 Zeuthen (DE)
(72) Erfinder: Neumann, Harald, Wildau (DE)
(74) Vertreter: Weisse, Renate

(57) **Zusammenfassung**

Verfahren zur Messung von Eigenschaften einer Weichenanlage (10) mit den Schritten: Definieren eines oder mehrerer Messpunkte (32, 34), an denen die Eigenschaften bestimmt werden sollen; und Messen der Eigenschaften an den definierten Messpunkten (32, 34); ist dadurch gekennzeichnet, dass jeder der Messpunkte (32, 34) durch den Abstand zu einem Referenzpunkt (24) definiert ist und der Referenzpunkt an der schmalsten Stelle am Herzstück (22) liegt.

## Beschreibung

### Technisches Gebiet

Die Erfindung betrifft ein Verfahren zur Messung von Eigenschaften einer Weichenanlage mit den Schritten:
(a) Definieren eines oder mehrerer Messpunkte, an denen die Eigenschaften bestimmt werden sollen; und
(b) Messen der Eigenschaften an den definierten Messpunkten.

Weichenanlagen bestehen aus stationären Teilen, etwa Backenschienen, und beweglichen Teilen, etwa der Zunge. Weichen unterliegen Verschleiß und müssen regelmäßig überprüft werden. In Richtlinie Ril 821.2005 zur Inspektion der Weichen, Kreuzungen, Schienenauszüge und Hemmschuhauswurfvorrichtungen ist gesetzlich vorgeschrieben, wie die Weichenanlage zu inspizieren ist. Für die Weichenmessung sind Punkte definiert, an denen verschiedene Messwerte erfasst werden sollen und in ein Weichenmessblatt einzutragen sind. Diese Punkte orientieren sich beispielsweise an Schweißungen, Zungenanfang, Herzstückspitze und dergleichen. Beispielsweise soll ein Wert 50 mm hinter der Termintblombe des jeweiligen Schweißstoß erfasst werden.

Problematisch bei dieser Vorgehensweise ist es, dass der Schweißstoß bei handwerklich sauberer Verarbeitung nur schwer zu erkennen ist und einige cm lang ist. Der Zungenanfang ändert seine Lage mit der Zeit aufgrund von Verschleiß. Die Messungen erfolgen daher zu unterschiedlichen Zeiten nach Ablauf eines Inspektionsintervalls an unterschiedlichen Referenzpunkten. Dies führt zu Ungenauigkeiten. Die Richtigkeit und Reproduzierbarkeit der Messungen wird ferner dadurch beeinträchtigt, dass die Messungen manuell durchgeführt werden.

### Stand der Technik

Beispielsweise auf https://www.rhein-mosel-gleisbau.de/weicheninspektion-nach-ril-821-2005 ist illustriert, wie eine Weiche nach der Richtlinie Ril 821.2005 zu inspizieren ist. Deutlich erkennbar ist, dass die Inspektion von Hand, beispielsweise mit Wasserwaage, Zollstock, Messkeil, Prüflehre etc. erfolgt. Die Messwerte werden von Hand notiert. Das ist aufwändig und ungenau.

DE 10 2007 009 316 B4 beschreibt eine stationäre Inspektionsvorrichtung für eine Weichenanlage. Für jede Weiche ist eine eigene Inspektionsvorrichtung erforderlich. Herstellung, Installation und Wartung sind mit hohen Kosten verbunden.

EP 1 415 885 B1 offenbart ein Verfahren zur kontaktfreien Messung eines Querprofils bzw. Abstands von Schienen eines Gleises.

DE 10 2019 200 031 A1 offenbart ein Verfahren zum Ermitteln einer Fehlerursache bei Weichenstörungen im schienengebundenen Verkehr, bei dem die Weiche modelliert und die Fehlerursache geschätzt wird.

DE 10 2004 016 828 A1 offenbart ein Verfahren zur Prüfung und Beurteilung einer Überlaufgeometrie von Gleisbauteilen, bei dem der räumliche Verlauf einer Bahnkurve eines mit einem Referenzradprofil versehenen Rades beim Überrollen des jeweiligen Gleisbauteils in einem raumfesten Koordinatensystem bestimmt wird. Die Druckschrift gibt keinen Hinweis auf die Arte des Koordinatensystems.

### Offenbarung der Erfindung

Es ist Aufgabe der Erfindung, ein Verfahren der eingangs genannten Art zu schaffen, mit welchem eine hohe Richtigkeit und Wiederholbarkeit der Ergebnisse erreicht werden kann. Erfindungsgemäß wird die Aufgabe dadurch gelöst, dass
(c) jeder der Messpunkte durch den Abstand zu einem Referenzpunkt definiert ist und der Referenzpunkt am Flügelschienenknick liegt.

Als Flügelschienenknick wird hier die in Fahrtrichtung schmalste Stelle am Herzstück bezeichnet. Es hat sich überraschenderweise herausgestellt, dass sich Verschleißerscheinungen zwar auch am Herzstück zeigen, dass aber die Position der schmalsten Stelle am Herzstück auch bei viel Verschleiß mit hoher Genauigkeit unveränderlich ist. Anders als die Position des Zungenanfangs oder die Position eines Schweißstoßes bleibt dieser Referenzpunkt immer gleich. Zwar unterliegt die Weiche auch dort Verschleiß und verändert ihre Form in lateraler Richtung und wird breiter. Die Position in Fahrtrichtung bleibt aber praktisch unverändert.

Die Definition eines Referenzpunktes, der in Fahrtrichtung unveränderlich ist, ermöglicht den Bezug aller anderen Messpunkte auf diesen Referenzpunkt. Entsprechend ist es unerheblich, ob ein Schweißstoß eine Ausdehnung in Fahrtrichtung hat oder nicht. Es wird immer an der gleichen Stelle gemessen. In gleicher Weise ist es unerheblich, ob der Zungenanfang sich durch Abnutzung verschiebt. Die Inspektion der Weiche erfolgt immer am gleichen Punkt entlang der Strecke. Dadurch sind die Messergebnisse wiederholbar und es wird eine höhere Richtigkeit erreicht.

Die Messung kann, wie bereits üblich, manuell durchgeführt werden. Dies ist jedoch mit einem Fehler behaftet. Die Messergebnisse können falsch abgelesen oder eingetragen werden. Außerdem besteht weiterhin die Gefahr, dass versehentlich an der falschen Stelle gemessen wird. Es ist daher bevorzugt vorgesehen, die Eigenschaften der Weiche zumindest teilweise mit optischen oder anderen berührungslosen Messverfahren erfasst werden. Die mit solchen Messverfahren erzeugten Signale können von Hand abgelesen und in ein Messblatt eingetragen werden. Vorzugsweise werden die Signale aber an eine Steuer- und Auswerteeinheit übertragen, welche die Signale speichert, auswertet und die Ergebnisse auf geeignete Weise zur Verfügung stellt.

Beispielsweise können die Eigenschaften der Weiche zumindest teilweise mit Lasertriangulation erfasst werden. Damit können alle relevanten geometrischen Eigenschaften der Weiche erfasst, gespeichert und ausgewertet werden. Es versteht sich, dass auch andere Eigenschaften mit anderen Messgeräten erfasst werden können.

Besonders vorteilhaft ist die Erfindung, wenn die Eigenschaften der Weiche unter Last während der Überfahrt eines Fahrzeugs erfasst werden. Insbesondere kann vorgesehen sein, dass die Eigenschaften der Weiche mit Messgeräten erfasst werden, welche zumindest teilweise an dem Fahrzeug befestigt sind, welches über die Weiche fährt und die Last erzeugt. Die Messergebnisse spiegeln dann die Realität bei Belastung der Weiche während der Überfahrt wider.

Die Messung der Weiche kann durch Abtasten in gleichmäßigen Abständen in Fahrtrichtung erfolgen, die Messdaten können in einem Datensatz gespeichert werden und die Eigenschaften der Weiche können aus diesem Datensatz ermittelt werden. Das hat den Vorteil, dass die Ergebnisse zu jedem späteren Zeitpunkt überprüft und nachvollzogen werden können. Es versteht sich, dass die Auswertung der Messdaten auch direkt vor Ort erfolgen kann. Messwerte liegen beim Abtasten nicht nur an den geforderten Messpunkten vor, sondern auch an anderen Orten. Dadurch ergibt sich ein besseres Bild des Gesamtzustands der Weiche.

Bei einer besonders bevorzugten Ausgestaltung der Erfindung wird die Weiche mit einer Abtastrate abgetastet, bei welcher eine Messung im Abstand von maximal 10 cm in Fahrtrichtung erfolgt, vorzugsweise maximal 2 cm und höchst vorzugsweise maximal 1 cm. Während 10 cm einer Abtastrate entspricht, die auch bei Messungen an Gleiskörpern ohne Weiche verwendet wird, kann eine geringere Abtastrate von maximal 2 und vorzugsweise maximal 1 cm zu einer höheren Genauigkeit der Messergebnisse führen.

Wenn die Messergebnisse in einem Datensatz gespeichert werden, kann der Referenzpunkt aus dem Datensatz bestimmt werden. Dabei können auch Interpolationsverfahren und andere Auswerteverfahren eingesetzt werden.

Die Eigenschaften der Weiche können insbesondere ausgewählt sein aus der Gruppe umfassend GPS-Kurs, Gyrometerwinkel, Kuppe-Wanne, Lage X Schiene L, Lage X Schiene R, Lage Y Schiene L, Lage Y Schiene R, Längshöhe, Längshöhe pro Schiene, Leitflankenabstand, Leitweite L, Leitweite L/R, Leitweite R, Pfeilhöhe, Pfeilhöhe pro Schiene, Rillentiefe L/R, Rillentiefe - L, Rillentiefe - R, Rillenweite L/R.

Ausgestaltungen der Erfindung sind Gegenstand der Unteransprüche. Ein Ausführungsbeispiel ist nachstehend unter Bezugnahme auf die beigefügten Zeichnungen näher erläutert.

### Definitionen

In dieser Beschreibung und in den beigefügten Ansprüchen haben alle Begriffe eine dem Fachmann geläufige Bedeutung, welche der Fachliteratur, Normen und den einschlägigen Internetseiten und Publikationen, insbesondere lexikalischer Art, beispielsweise www.Wikipedia.de, www.wissen.de oder der Wettbewerber, forschenden Institute, Universitäten und Verbände dargelegt sind. Insbesondere haben die verwendeten Begriffe nicht die gegenteilige Bedeutung dessen, was der Fachmann den obigen Publikationen entnimmt.

### Kurze Beschreibung der Zeichnungen

- Fig. 1: ist eine schematische Darstellung einer Weiche
- Fig.2: ist eine Profilansicht der Weiche aus Figur 1 im Bereich des Herzstücks.
- Fig.3: zeigt ein Beispiel für eine Laserlichtschnitteinheit an einer Vignolschiene.

### Beschreibung des Ausführungsbeispiels

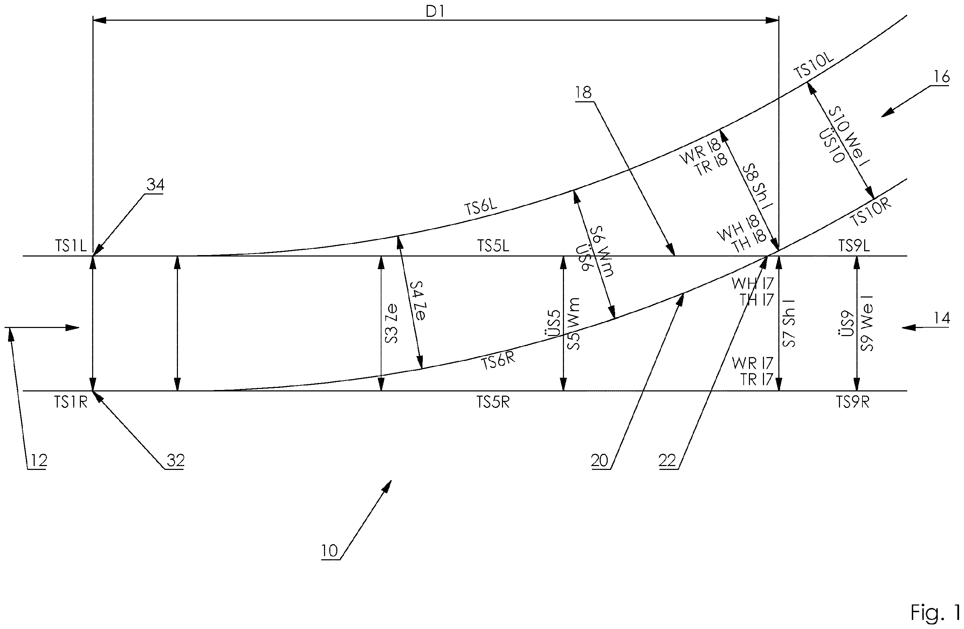

Figur 1 ist eine schematische Darstellung einer allgemein mit 10 bezeichneten Weiche. Die Weiche 10 ermöglicht es Schienenfahrzeugen in Fahrtrichtung 12 von einem Gleis 14 auf ein anderes Gleis 16 zu wechseln. Beispiele für Schienenfahrzeuge sind U-Bahnen, Straßenbahnen und Eisenbahnzüge.

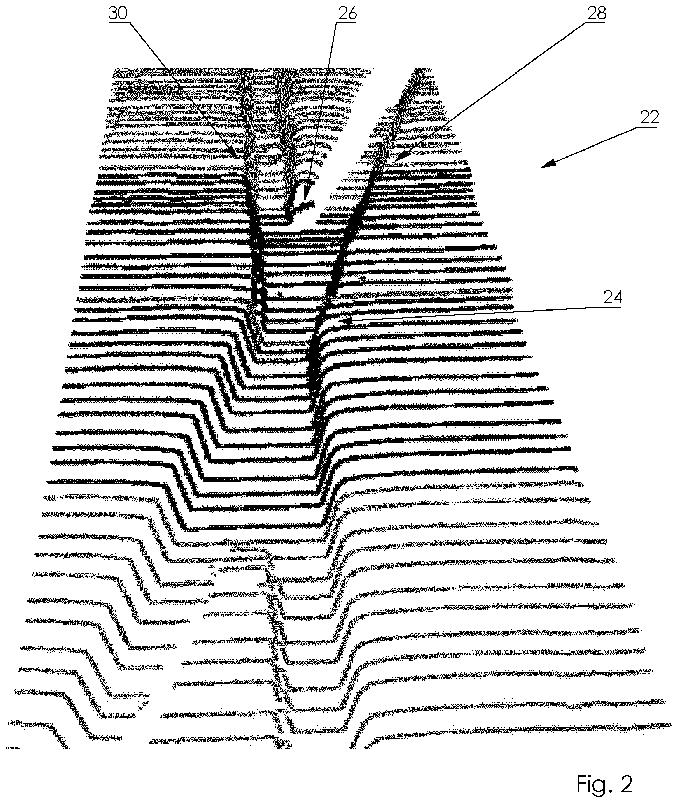

Die innenliegenden Stränge 18 und 20 der Gleise 14 und 16 schneiden sich und müssen unterbrochen werden, damit der Spurkranz eines Rades, das die andere Schiene befährt, unbeeinträchtigt durchlaufen kann. Diese Stelle ist das Herzstück 22. Figur 2 zeigt das gemessene Profil eines solchen Herzstücks 22. Jedes Herzstück hat eine Herzstückspitze 26. Seitlich zur Herzstückspitze 26 erstrecken sich Flügelschienen 28 und 30. Die Flügelschienen 28 und 30 führen zusammen mit dem Radlenker (nicht dargestellt) das Rad im Bereich der Herzstückspitze 26. Die Flügelschienen 28 und 30 bilden eine Verjüngung im Profil, d.h. eine schmalste Stelle (Flügelschienenknick). Diese ist in Figur 2 mit 24 bezeichnet. Es konnte gezeigt werden, dass diese Stelle 24 in Fahrtrichtung auch bei Verschleiß immer an der gleichen Stelle liegt.

Die schmalste Stelle 24 (Flügelschienenknick) am Herzstück 22 bildet einen Referenzpunkt für die Inspektion einer Weiche 10. Ausgehend von diesem Referenzpunkt können nun verschiedene Messpunkte ermittelt werden. Beispielsweise liegt ein erster Messpunkt TS1R an der rechten Schiene, der mit 32 bezeichnet ist und ein erster Messpunkt TS1L an der linken Schiene, der mit 34 bezeichnet ist, in einem Abstand D1 zum Referenzpunkt 24 des Herzstücks 22. Für weitere Messpunkte, etwa an der Schweißung des Zungenendes etc. können auf gleiche Weise ermittelt werden. An diesen Stellen werden nun die erforderlichen oder gewünschten Messungen durchgeführt.

Im vorliegenden Ausführungsbeispiel werden verschiedene Messsysteme eingesetzt, nämlich Laser-Lichtschnitteinheiten für die jeweilige Schiene, beispielsweise Vignolschiene und Rillenschiene, Radarsensor, sowie ein Stoßsensor und ein Inertialsystem. Es versteht sich, dass auch andere Messysteme verwendet werden können.

Das Messsystem zur Gleismessung dient der Erfassung und Überprüfung des Zustandes der Gleisanlage. Mit dem Messsystem werden die relevanten Daten der Gleisgeometrie erfasst und insbesondere der Schienenverschleiß bestimmt. Dadurch kann der Gesamtzustand beurteilt werden. Ggf. können geeignete Maßnahmen eingeleitet werden und es kann langfristig geplant werden. Unterstützend werden Videofilme synchron zu den Messdaten aufgezeichnet und die Position auf der Strecke ermittelt. Das Messystem wird im vorliegenden Ausführungsbeispiel auf einem geeigneten Schienenfahrzeug installiert. Die Messung kann währende der Fahrt erfolgen. Es wird dabei alle 1 cm ein Datensatz aufgezeichnet. Die Messergebnisse sind dynamisch. Das bedeutet, dass die Ergebnisse die Bedingungen unter Last widerspiegeln, denen sie auch im regulären Betrieb unterliegen.

Die Auswertung der Messergebnisse erfolgt mittels einer geeigneten Software. Die Videofilme unterstützen bei der Beurteilung von Problemstellen. Die gleichzeitig aufgenommenen Koordinaten zu den Messwerten ermöglichen die Darstellung in einer Karte.

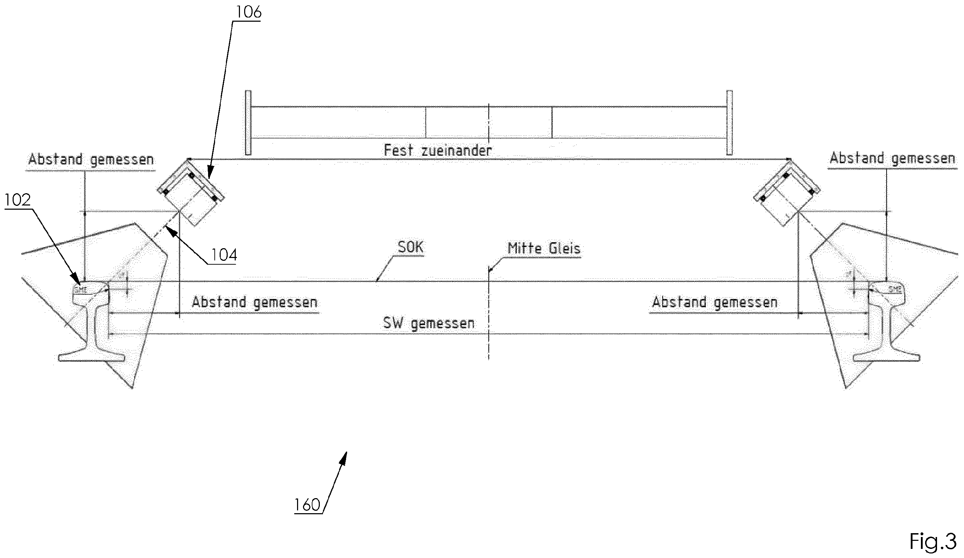

Figur 3 zeigt ein Beispiel für eine Laserlichtschnitteinheit 160 an einer Vignolschiene. Die Laser-Lichtschnitteinheit 160 arbeitet mit Lasertriangulation. Eine Laserlinie 104 wird auf ein zu messendes Objekt 102 projiziert. Eine im gleichen Gehäuse unter festem Winkel angeordnete Kamera 106 erfasst die reflektierte Laserlinie. Die Messung ermöglicht die Erfassung von Distanzen im Raum, insbesondere Schienenprofile und Spurweite. Bei Vignolschienen kann die Schienenkopfhöhe erfasst werden. Bei Rillenschienen können Rillentiefe, Rillenweite, Leitweite, Leitflankenabstand und Fahrkopfverschleiß erfasst werden. Dabei werden die Lichtschnitteinheiten so installiert, dass diese senkrecht nach unten ausgerichtet sind um die Rille zu erfassen.

Zusätzlich wird ein Inertialsystem verwendet, welches mit robusten Faserkreiseln und Beschleunigungsmessern ausgerüstet ist. Aus den Drehraten des Inertialsystems werden die Messgrößen der Gleisgeometrie bestimmt. Viele Größen der Gleisgeometrie werden berechnet, beispielsweise die Spurweite.

Mit einem Radarsensor wird zusätzlich zur Wegerfassung im Inertialsystem der durchfahrene Weg erfasst. Der Radarsensor arbeitet mit Doppler-Effekt und erzeugt nach jedem Wegzentimeter einen Impuls. Dieser wird gesplittet und in die anderen Messsysteme eingespeist. Dies erlaubt die Synchronisation der Messdaten unterschiedlicher Messsysteme. Zusätzlich kann ein GPS-System eingesetzt werden.

Mit dem beschriebenen Messsystem wird die Weiche 10 abgetastet. Im Ergebnis ergeben sich an der Weiche Bilder bzw. Daten, wie sie beispielhaft in Figur 2 dargestellt sind. Aus den Daten wird die schmalste Stelle 24 am Herzstück 22 bestimmt. Von dieser werden die Daten an den vorgeschriebenen Messpunkten ermittelt und ausgewertet. Es werden also immer Messungen an den gleichen Messpunkten verwendet. Dadurch wird eine sehr gute Reproduzierbarkeit erreicht. Die Messung mit dem beschriebenen Messsystem während der Fahrt ist deutlich schneller, als die Begehung und manuelle Messung. Sie erlaubt die nachträgliche Auswertung und Nachvollziehbarkeit aller Ergebnisse.

Die oben erläuterten Ausführungsbeispiele dienen der Illustration der in den Ansprüchen beanspruchten Erfindung. Merkmale, welche gemeinsam mit anderen Merkmalen offenbart sind, können in der Regel auch alleine oder in Kombination mit anderen Merkmalen, die im Text oder in den Zeichnungen explizit oder implizit in den Ausführungsbeispielen offenbart sind, verwendet werden. Maße und Größen sind nur beispielhaft angegeben. Dem Fachmann ergeben sich geeignete Bereiche aus seinem Fachwissen und brauchen hier daher nicht näher erläutert werden. Die Offenbarung einer konkreten Ausgestaltung eines Merkmals bedeutet nicht, dass die Erfindung auf diese konkrete Ausgestaltung beschränkt werden soll. Vielmehr kann ein solches Merkmal durch eine Vielzahl anderer, dem Fachmann geläufigen Ausgestaltungen verwirklicht werden. Die Erfindung kann daher nicht nur in Form der erläuterten Ausgestaltungen verwirklicht werden, sondern durch alle Ausgestaltungen, welche vom Schutzbereich der beigefügten Ansprüche abgedeckt sind.

Die Begriffe "oben", "unten", "rechts" und "links" beziehen sich ausschließlich auf die beigefügten Zeichnungen. Es versteht sich, dass beanspruchte Vorrichtungen auch eine andere Orientierung annehmen können. Der Begriff "enthaltend" und der Begriff "umfassend" bedeuten, dass weitere, nicht-genannte Komponenten vorgesehen sein können. Unter dem Begriff "im Wesentlichen", "vorwiegend" und "überwiegend" fallen alle Merkmale, die eine Eigenschaft oder einen Gehalt mehrheitlich, d.h. mehr als alle anderen genannten Komponenten oder Eigenschaften des Merkmals aufweisen, also bei zwei Komponenten beispielsweise mehr als 50%.

## Patentansprüche

1. Verfahren zur Messung von Eigenschaften einer Weichenanlage (10) mit den Schritten:
(a) Definieren eines oder mehrerer Messpunkte (32, 34), an denen die Eigenschaften bestimmt werden sollen; und
(b) Messen der Eigenschaften an den definierten Messpunkten (32, 34);
**dadurch gekennzeichnet, dass**
(c) j eder der Messpunkte (32, 34) durch den Abstand zu einem Referenzpunkt (24) definiert ist und der Referenzpunkt am Flügelschienenknick (22) liegt.

2. Verfahren nach Anspruch 1, **dadurch gekennzeichnet, dass** die Eigenschaften der Weiche (10) zumindest teilweise mit optischen oder anderen berührungslosen Messverfahren erfasst werden.

3. Verfahren nach Anspruch 2, **dadurch gekennzeichnet, dass** die Eigenschaften der Weiche (10) zumindest teilweise mit Lasertriangulation erfasst werden.

4. Verfahren nach Anspruch 2 oder 3, **dadurch gekennzeichnet, dass** die Eigenschaften der Weiche (10) unter Last während der Überfahrt eines Fahrzeugs erfasst werden.

5. Verfahren nach Anspruch 4, **dadurch gekennzeichnet, dass** die Eigenschaften der Weiche (10) mit Messgeräten erfasst werden, welche zumindest teilweise an dem Fahrzeug befestigt sind, welches über die Weiche fährt und die Last erzeugt.

6. Verfahren nach einem der vorgehenden Ansprüche, **dadurch gekennzeichnet, dass** die Messung der Weiche (10) durch Abtasten in gleichmäßigen Abständen in Fahrtrichtung erfolgt, die Messdaten in einem Datensatz gespeichert werden und die Eigenschaften der Weiche aus diesem Datensatz ermittelt werden.

7. Verfahren nach Anspruch 6, **dadurch gekennzeichnet, dass** die Weiche mit einer Abtastrate abgetastet wird, bei welcher eine Messung im Abstand von maximal 10 cm in Fahrtrichtung erfolgt, vorzugsweise maximal 2 cm und höchst vorzugsweise maximal 1 cm.

8. Verfahren nach Anspruch 6 oder 7, **dadurch gekennzeichnet, dass** der Referenzpunkt (24) aus dem Datensatz bestimmt wird.

9. Verfahren nach einem der vorgehenden Ansprüche, **dadurch gekennzeichnet, dass** die Eigenschaften der Weiche ausgewählt sind aus der Gruppe umfassend GPS-Kurs, Gyrometerwinkel, Kuppe-Wanne, Lage X Schiene L, Lage X Schiene R, Lage Y Schiene L, Lage Y Schiene R, Längshöhe, Längshöhe pro Schiene, Leitflankenabstand, Leitweite L, Leitweite L/R, Leitweite R, Pfeilhöhe, Pfeilhöhe pro Schiene, Rillentiefe L/R, Rillentiefe - L, Rillentiefe - R, Rillenweite L/R.
